# EUROPÄISCHE PATENTSCHRIFT

(11) **EP 3 408 080 B1**
(45) Veröffentlichungstag und Bekanntmachung des Hinweises auf die Patenterteilung: **07.06.2023**
(21) Anmeldenummer: 17700235.9
(22) Anmeldetag: 10.01.2017
(51) Int. Cl.: B30B 15/04, B29C 70/44, B30B 5/02

(54) **PRESSE ZUM HERSTELLEN EINES BAUTEILS AUS EINEM FASERVERBUNDWERKSTOFF**
PRESS FOR PRODUCING A COMPONENT FROM A FIBRE-COMPOSITE MATERIAL
PROCÉDÉ POUR LA FABRICATION D'UNE PIÈCE À PARTIR D'UN MATÉRIAU COMPOSITE RENFORCÉ PAR DES FIBRES

(30) Priorität: 29.01.2016 DE 102016101631
(43) Veröffentlichungstag der Anmeldung: 05.12.2018
(73) Patentinhaber: Siempelkamp Maschinen- und Anlagenbau GmbH, 47803 Krefeld (DE)
(72) Erfinder: DREES, Reinhold, 47800 Krefeld (DE); SCHOELER, Michael, 47509 Rheurdt (DE)
(74) Vertreter: Andrejewski - Honke Patent- und Rechtsanwälte Partnerschaft mbB
(86) Internationale Anmeldenummer: PCT/EP2017/050422
(87) Internationale Veröffentlichungsnummer: WO 2017/129397

(56) Entgegenhaltungen:
- DE-C1- 19 859 798
- JP-A- 2002 346 797
- US-A- 3 756 145
- US-A- 5 225 027
- US-A- 5 664 494
- US-A- 5 820 724
- US-A1- 2010 181 017

## Beschreibung

Die Erfindung betrifft eine Presse zum Herstellen eines (dreidimensionalen) Bauteils aus einem Faserverbundwerkstoff durch Umformen eines (zweidimensionalen) thermoplastischen Halbzeuges, z. B. Organoblechs.

Organoblech meint im Rahmen der Erfindung ein plattenförmiges (konsolidiertes) Halbzeug, welches aus Fasern besteht, die in eine Matrix aus thermoplastischem Kunststoff eingebettet sind. Die Fasern können als Endlosfasern oder Langfasern vorliegen, zum Beispiel in Form eines Fasergewebes oder Fasergeleges. Bei den Fasern kann es sich zum Beispiel um Kohlenstofffasern, Glasfasern oder Aramidfasern handeln. Solche Organobleche werden als Faserverbundwerkstoffe für die Herstellung von Bauteilen (z. B. Leichtbau) für die Luft- und Raumfahrttechnik (z. B. den Flugzeugbau) und für die Fahrzeugtechnik (z. B. im Automobilbau) eingesetzt. Durch die thermoplastische Fasermatrix lassen sich solche Organobleche ähnlich wie Metallbleche (warm) umformen, so dass in der Praxis bei der Verarbeitung von Organoblechen bzw. bei der Herstellung von Bauteilen aus solchen Organoblechen auf Methoden der Metallblechverarbeitung zurückgegriffen wird.

So beschreibt zum Beispiel die DE 10 2011 115 730 A1 ein Verfahren zum Umformen von thermoplastischen Faserhalbzeugplatten mit orientierten Fasern zu dreidimensional geformten thermoplastischen Halbzeugen mit definierten Orientierungsgraden, wobei die als Organoblech ausgebildete Faserhalbzeugplatte durch eine Heizvorrichtung auf eine Temperatur unterhalb einer Erweichungstemperatur des Thermoplasten erwärmt wird, wobei die Faserhalbzeugplatte auf einem Formmodul positioniert wird, das die dreidimensionale Form abbildet. Anschließend wird ein Fluid in die Formkammer zugeführt und dadurch die erwärmte Faserhalbzeugplatte an das Formmodul angepresst und hierdurch zu dem dreidimensional geformten thermoplastischen Halbzeug umgeformt.

Weitere Verfahren zur Verarbeitung von Organoblechen bzw. von Bauteilen aus solchen Organoblechen werden zum Beispiel in der DE 10 2013 105 080 A1, der DE 10 2011 111 233 A1 und der DE 10 2011 111 232 A1 beschrieben.

Alternativ wird in der DE 198 59 798 C1 die Herstellung von Formkörpern aus Faserverbundwerkstoffen durch das sogenannte Prepreg-Verfahren beschrieben. Dabei werden dünne Lagen von in teilausgehärtetem Harz eingebetteten Fasern laminiert, bis eine Vorform des Formkörpers entstanden ist. Anschließend wird diese Vorform unter mechanischem Druck bei gleichzeitiger Einwirkung eines Vakuums zum Abziehen von Luftblasen aus der Vorform durch Erwärmen ausgehärtet. Dies geschieht typischerweise in einem Autoklaven, in dem die Vorform auf einer Negativform aufliegt und von einer flexiblen Membran abgedeckt wird. Die flexible Membran ist gegenüber der Negativform abgedichtet. Dabei ist zwischen der Vorform der Membran noch eine Schicht aus Gewebematerial angeordnet, die zum Aufnehmen von überschüssigem Harz und zur Ausbildung einer Vakuumzone, des sogenannten Vakuumsacks dient. Der Bereich des Vakuumsacks ist an einer Vakuumquelle angeschlossen.

Davon ausgehend wird in der DE 198 59 798 C1 ein Verfahren zum Herstellen von Formkörpern aus Faserverbundwerkstoffen beschrieben, das auf einem RTM-Verfahren aufbaut. Auf eine steife Negativform wird eine Fasermatte aufgebracht und die Fasermatte wird mit einer flexiblen Membran abgedeckt. Die Membran wird gegenüber der Negativform um die Fasermatte umlaufend abgedichtet und der derart abgedichtete Zwischenraum zwischen der Negativform und der Membran wird evakuiert und auf der der Negativform abgekehrten Rückseite der Membran wird ein statischer Überdruck aufgebracht. Dann wird in den Zwischenraum zwischen der Negativform und der Membran eine Menge flüssigen Harzes mit einem Injektionsdruck injiziert, der größer ist als der Überdruck auf der Rückseite der Membran. Das Harz wird durch die beheizte Negativform unter Einwirkung des Überdrucks auf der Rückseite der Membran erwärmt und zumindest teilweise ausgehärtet. Der Überdruck auf der Rückseite der Membran wird dann abgelassen und der Formkörper mit der in das zumindest teilweise ausgehärtete Harz eingebetteten Fasermatte entformt. Die Negativform kann dabei kontinuierlich beheizt werden und die Membran kann auf ihrer Rückseite gekühlt werden.

Ähnliche Verfahren, bei denen mit einer Membranpresse gearbeitet und ein Harz in den Formraum injiziert wird, werden zum Beispiel in der EP 1 420 940 B1 oder der DE 694 09 618 T2 beschrieben.

Die DE 40 40 746 A1 beschreibt ein Verfahren zum Verdichten eines Verbundmaterialkörpers mit einer Struktur aus unverdichteten Schichten verstärkenden Fasern, die in eine Matrix eingebettet sind, in einer Membranpresse. Weitere Dokumente die den Stand der Technik beschreiben sind die US 5820724 A, welche die Merkmale des Oberbegriffs des Anspruchs 1 zeigt, sowie die JP 2002346797 A, welche eine Presse mit C-Gestell zeigt.

Der Erfindung liegt die Aufgabe zugrunde, eine Presse zum Herstellen von (Leicht-)Bauteilen aus Faserverbundwerkstoffen zu schaffen, die sich durch einfache und stabile Bauweise auszeichnet und bevorzugt für die Herstellung großer Bauteile geeignet ist.

Zur Lösung dieser Aufgabe lehrt die Erfindung eine Presse zum Herstellen eines Bauteils aus einem Faserverbundwerkstoff, welcher als Membranpresse ausgebildet ist nach Anspruch 1. Vorteilhafte Ausführungsformen sind in den abhängigen Ansprüchen definiert.

Diese Presse ist erfindungsgemäß dadurch gekennzeichnet, dass das Pressengestell als C-Gestell ausgebildet ist, welches einen oberen horizontalen C-Schenkel, einen unteren horizontalen C-Schenkel und eine vertikale C-Basis aufweist, die im oberen C-Schenkel und im unteren C-Schenkel miteinander verbindet.

Eine solche Membranpresse mit C-Gestell eignet sich in besonderer Weise für die Herstellung großer Teile und insbesondere für die Herstellung flacher oder geformter Teile, z.B. Flugzeugflügeln, Klappen von Flugzeugflügeln usw. Die C-Presse zeichnet sich durch eine seitlich offene Bauweise aus, so dass insbesondere große bzw. lange Halbzeuge einfach in die Presse eingelegt und umgeformt werden können.

Bevorzugt kommt ein C-Gestell in Rahmenbauweise zum Einsatz. Rahmenbauweise meint dabei, dass das C-Gestell aus mehreren (entlang der Längsrichtung hintereinander angeordneten und jeweils C-förmig ausgebildeten und miteinander verbundenen Pressenrahmen besteht. Die einzelnen Pressenrahmen können dabei mit Spannelementen, z. B. Spannstangen miteinander verspannt sein. Solche Pressenrahmen bestehen bevorzugt aus jeweils einem oder mehreren Rahmenblechen, wobei die Rahmenbleche bevorzugt jeweils einstückig ausgebildet sind. Eine Ausgestaltung des C-Gestells in Rahmenbauweise zeichnet sich durch eine einfache und stabile Modulbauweise aus, denn das Pressengestell wird aus einer Vielzahl identischer oder ähnlicher Teile zusammengesetzt, die hintereinander gereiht aufgebaut werden, so dass sich insbesondere Pressen großer Länge bzw. Breite für die Herstellung großer Teile sehr einfach herstellen lassen.

In bevorzugter Ausführungsform ist die Presse als Oberkolbenpresse ausgebildet. Das bedeutet, dass die Presszylinder an dem oberen C-Schenkel abgestützt sind und auf das bewegliche Pressenoberteil arbeiten, welches folglich einen Laufholm bildet. An diesem Laufholm ist dann bevorzugt der Druckkoffer befestigt. Das Pressenunterteil bildet den Pressentisch und ist folglich ortsfest auf dem unteren C-Schenkel angeordnet und darauf abgestützt.

Grundsätzlich werden aber auch Pressen in einer Unterkolben-Bauweise erfasst.

Es ist vorgesehen, dass die Presse eine Vakuumpumpe aufweist, mit der auf der einen Seite der Membran, z.B. auf der Unterseite, ein Unterdruck erzeugt wird. Optional kann (zusätzlich) eine Überdruckpumpe vorgesehen sein, mit der auf der anderen Seite der Membran ein Überdruck erzeugbar ist.

Bevorzugt ist das Pressenunterteil, z.B. der Pressentisch, beheizbar. An das Pressenunterteil ist folglich eine Heizvorrichtung angeschlossen oder das Pressenunterteil ist mit einer integrierten Heizvorrichtung ausgebildet.

In weiterer Ausgestaltung besteht die Möglichkeit, dass das Pressenoberteil beheizbar ist. Dabei kann es sich um einen beheizbaren Laufholm handeln. An diesem Laufholm kann der Druckkoffer befestigt sein. Dieser Druckkoffer kann selbstständig ebenfalls beheizbar sein. Es besteht auch die Möglichkeit, den Druckkoffer über den beheizbaren Laufholm zu beheizen.

Auch das Werkzeug bzw. die Form selbst kann beheizbar sein. Dabei kann die Form von einer beheizbaren Grundplatte gebildet werden. Optional kann aber auf dem Pressentisch auch eine beheizbare Grundplatte angeordnet sein, auf der dann ein (separates) Werkzeug bzw. eine separate Form angeordnet wird.

Die Membran ist bevorzugt als Silikonmembran bzw. Silikonfolie ausgebildet.

Mit einer solchen Presse lassen sich Bauteile aus einem Faserverbundwerkstoff herstellen, indem zumindest ein Halbzeug, z. B. Organoblech als Werkstück an oder auf die Form gelegt wird,
wobei eine elastisch dehnbare Membran unter Zwischenschaltung des Halbzeugs/Organoblechs über die Form gedehnt vorgespannt wird und
wobei das Halbzeug/Organoblech unter Bildung des Bauteils umgeformt wird, indem die Membran auf der der Form zugewandten Seite mit einem Unterdruck und optional auf der der Form abgewandten Seite mit einem Überdruck beaufschlagt wird, so dass sich das Halbzeug/Organoblech an die Form anformt.

Die Erfindung geht dabei von der Erkenntnis aus, dass sich dreidimensionale Faserverbundbauteile mit hoher Stabilität und hoher Genauigkeit wirtschaftlich aus z.B. Organoblechen in einer Membranpresse herstellen lassen, wobei solche Organobleche als (zweidimensionale) plattenförmige konsolidierte Halbzeuge zur Verfügung stehen und sich in der Membranpresse hervorragend unter Anwendung von Druck und Wärme zu dreidimensionalen Strukturen umformen lassen, die zum Beispiel im Flugzeugbau, Fahrzeugbau oder dergleichen einsetzbar sind. Dabei wird - im Gegensatz zu herkömmlichen Prepreg-Verfahren - bevorzugt nicht mit lediglich teilausgehärteten Matten, sondern mit konsolidierten Halbzeugen in Form von Organoblechen gearbeitet, so dass auch kein Injizieren flüssiger Harze oder dergleichen in die Presse erfolgt. Besonders bevorzugt wird dabei ein Organoblech als vorgefertigtes Halbzeug verwendet, das aus mehreren Organoblechlagen besteht, die vor dem Einlegen in die Presse zusammengelegt und gegebenenfalls miteinander verbunden werden. Auf diese Weise lassen sich sehr stabile Bauteile herstellen, die auch eine gewisse Dicke bzw. Wandstärke aufweisen können. Dennoch gelingt im Rahmen der Erfindung in der Membranpresse eine einwandfreie Umformung, da in die Presse eine (hoch-)elastisch dehnbare Membran eingespannt ist, welche unter Zwischenschaltung des Organoblechs elastisch gedehnt und über die Form gespannt wird. Durch das Anlegen von Unterdruck einerseits und Überdruck andererseits erfolgt dann eine einwandfreie Umformung, wobei sich die hochelastische Membran stark dehnt und einwandfrei an die gewünschte Kontur bzw. unter Zwischenschaltung des Organoblechs an die Kontur der Form anlegt. Durch das Anlegen von Unterdruck einerseits und (sehr hohem) Überdruck andererseits gelingt die Umformung konsolidierter Organobleche zu Bauteilen mit komplexer Struktur und kleinen Radien, so dass sich zum Beispiel auch U-förmige Profile mit und ohne Hinterschneidung einwandfrei herstellen lassen. Über hohe Drücke in der Membranpresse wird eine einwandfreie Entlüftung des Werkstücks gewährleistet, so dass Porenbildungen vermieden bzw. Poren entfernt werden können. Insgesamt zeichnen sich die hergestellten Bauteile durch sehr hohe Oberflächenqualität und hohe Stabilität aus. Die Erfindung umfasst aber auch die Umformung anderer thermoplastischer Halbzeuge. So können insbesondere auch mehrere (nicht konsolidierte) thermoplastische Einzellagen (aus Faserverbundwerkstoff) als Halbzeug in die Presse eingelegt und verarbeitet werden.

Insgesamt können zum Beispiel hochstabile, leichte Bauteile für den Flugzeugbau, zum Beispiel für Tragflächen bzw. Tragflächenteile hergestellt werden. Beispielsweise können Profile hergestellt werden, die als Bestandteil von Landeklappen zum Einsatz kommen können.

Bevorzugt werden Halbzeuge oder Organobleche eingesetzt, deren Fasern als Carbonfasern, Glasfasern und/oder Aramidfasern ausgebildet sind. Als thermoplastischer Kunststoff kommen besonders bevorzugt hochtemperaturbeständige thermoplastische Kunststoffe, zum Beispiel Polyetheretherketon (PEEK) oder Polyphenylensulfid (PPS) zum Einsatz. Alternativ können jedoch auch Polypropylen (PP), Polyamid (PA) oder Polyurethan (TPU) verwendet werden, je nach Anforderungen und Einsatzgebiet. Die verwendeten Materialien können bei (konsolidierten) Organoblechen oder (konsolidierten) Organoblechlagen oder alternativ auch bei (nicht konsolidierten) Faserhalbzeugen oder deren Lagen zum Einsatz kommen.

Im Zuge der Herstellung ist es zweckmäßig, das Halbzeug/Organoblech vor und/oder nach dem Einlegen in die Presse zu erwärmen, um den Umformvorgang zu optimieren. Dabei ist es zweckmäßig, das jeweilige Halbzeug/Organoblech auf eine Temperatur oberhalb der Glasübergangstemperatur zu erwärmen. Je nach Material bzw. Organoblech bzw. je nach thermoplastischem Kunststoff kann es zweckmäßig sein, das Organoblech auf eine Temperatur von mehr als 180 °C, z. B. mehr als 200 °C zu erwärmen.

Alternativ oder ergänzend ist es zweckmäßig, die Form oder zumindest deren dem Organoblech zugewandte Oberfläche vor und/oder während der Umformung zu erwärmen. Hier kann es ebenfalls zweckmäßig sein, die Form bzw. deren Oberfläche auf eine Temperatur oberhalb der Glasübergangstemperatur des thermoplastischen Kunststoffs zu erwärmen, zum Beispiel auf eine Temperatur von mehr als 180 °C, z. B. mehr als 200 °C.

Außerdem ist es alternativ oder ergänzend besonders vorteilhaft, wenn auch das Druckmedium, mit dem die Membran beaufschlagt wird, zum Beispiel ein Druckgas, erwärmt wird, um den Wärmeeintrag zu optimieren und die Warmumformung zu verbessern.

Bevorzugt wird nicht nur ein Unterdruck auf der der Form zugewandten Seite der Membran angelegt, sondern die abgewandte Seite der Membran wird außerdem mit einem Überdruck beaufschlagt, wobei besonders bevorzugt ein Überdruck von zumindest 10 bar, zum Beispiel zumindest 20 bar erzeugt werden kann. Erfindungsgemäß wird folglich mit hohen Drücken gearbeitet, um der Tatsache Rechnung zu tragen, dass z. B. konsolidierte Organobleche verarbeitet bzw. umgeformt werden.

Dazu wird nicht - wie bei Membranpressen für die Verarbeitung von Prepregs oder für die Injektion von Harz üblich - mit einem Vakuumsack gearbeitet, sondern die hochelastische Membran wird über die Form gespannt. So kann sie zum Beispiel am Pressenunterteil befestigt und über die Form gespannt werden. Bevorzugt ist die Membran jedoch auch dem Pressenoberteil elastisch vorgespannt befestigt sein und dann im Zuge des Schließens der Presse über die Form gespannt werden.

Grundsätzlich können Membranen aus Kautschuk zum Einsatz kommen. Unter Berücksichtigung der Tatsache, dass bevorzugt mit hochtemperaturbeständigen Kunststoffen gearbeitet wird, empfiehlt die Erfindung den Einsatz einer Membran aus einem hochelastischen und zugleich temperaturbeständigen Material, zum Beispiel aus Silikon bzw. auf Silikonbasis. Dabei kann auf vorhandene Silikon-Membrane zurückgegriffen werden, die eine Bruchdehnung von zumindest 500 %, vorzugsweise zumindest 600 % aufweisen. Die Membran weist bevorzugt eine Dicke von zumindest 1 mm, besonders bevorzugt zumindest 2 mm auf.

Wie bereits beschrieben, wird als Organoblech besonders bevorzugt ein vorgefertigtes Halbzeug aus mehreren Organoblechlagen bzw. einer Vielzahl von Organoblechlagen verwendet, die vor dem Einlegen in die Presse zusammengelegt und gegebenenfalls miteinander verbunden werden. Dabei liegt es im Rahmen der Erfindung, die Organoblechlagen einzeln zusammenzulegen und gemeinsam zu verpressen. Bevorzugt werden die Organoblechlagen jedoch zuvor miteinander (in einer gewünschten Anordnung) verbunden, zum Beispiel durch Schweißen und/oder Kleben, wobei dann eine innige Verbindung anschließend im Zuge der Umformung in der Membranpresse erfolgt. Alternativ liegt es im Rahmen der Erfindung, die einzelnen Organoblechlagen in einer Vorpresse zu einem einheitlichen Organoblech zu verbinden.

Dabei können eine Vielzahl von Lagen verwendet werden, zum Beispiel zumindest fünf Lagen, bevorzugt zumindest zehn Lagen. Für hochstabile Bauteile (zum Beispiel für den Flugzeugbau) können auch mehr als zwanzig Lagen zu einem Organoblech zusammengefügt werden. Außerdem können alternativ eine Vielzahl (nicht konsolidierter) Lagen (lose) in die Presse eingelegt werden, z.B. zumindest fünf Lagen, bevorzugt zumindest zehn Lagen. Die Verarbeitung einzelner Lagen hat den Vorteil, dass die im Zuge der Umformung frei gegeneinander abgleiten können, so dass insbesondere auch komplizierte Strukturen mit gegebenenfalls mehreren Hinterschnitten einwandfrei gefertigt werden können.

Es liegt dabei im Rahmen der Erfindung, einzelne Lagen mit unterschiedlicher Faserausrichtung zu verwenden bzw. die einzelnen Lagen so zu stapeln, dass ihre Fasern nicht parallel verlaufen, sondern unter einem vorgegebenen Winkel. Auf diese Weise können besonders stabile Organobleche und entsprechende Bauteile hergestellt werden. Über die Auswahl und Anordnung der einzelnen Lagen lassen sich Eigenschaften und Geometrie des Bauteils hervorragend beeinflussen. So besteht zum Beispiel die Möglichkeit, einzelne Lagen in unterschiedlichen Größen unter Bildung eines Halbzeuges, z. B. Organoblechs mit über die Fläche variierender Dicke vorzusehen. So entstehen zum Beispiel in Bereichen, in denen mehr Lagen vorhanden sind, als in anderen Bereichen, Werkstücke mit größerer Dicke bzw. Wandstärke. In ähnlicher Weise besteht die Möglichkeit, die einzelnen Lagen so anzuordnen, dass im Zuge der Umformung bei einer Verschiebung der einzelnen Lagen zueinander eine gewünschte Kantengeometrie des Bauteils entsteht. Sind die einzelnen Lagen zum Beispiel im nicht umgeformten Zustand bündig angeordnet, so kann durch die Umformung eine schräge Kantengeometrie erzeugt werden und umgekehrt kann durch eine schräge Anordnung der einzelnen Lagen im Randbereich durch die Umformung eine gerade Kantengeometrie erzielt werden. So kann es zum Beispiel gewünscht sein, Bauteile mit abgeschrägten Kanten zu erzeugen, um verbesserte Fügeflächen für die Weiterverarbeitung zur Verfügung zu stellen.

In einer bevorzugten Weiterbildung kann eine zumindest bereichsweise luftdurchlässige Form verwendet werden, durch welche Luft im Zuge der Erzeugung des Unterdrucks hindurchgesaugt wird. Dieses lässt sich z.B. dadurch realisieren, dass eine Form aus einem porösen Werkstoff verwendet wird. Bevorzugt wird eine Form aus einem porösen Leichtmetall, besonders bevorzugt aus porösem Aluminium oder einer porösen Aluminiumlegierung verwendet. Die Erfindung geht bei diesem Aspekt davon aus, dass sich durch den Einsatz einer derartigen Form der Herstellungsprozess optimieren lässt, denn es wird die Möglichkeit geschaffen, ein vollflächiges Vakuum über die gesamte Umformfläche aufzubringen. Bei dem porösen Werkstoff handelt es sich bevorzugt um einen offenporigen porösen Werkstoff, z.B. offenporiges poröses Aluminium bzw. eine offenporige poröse Aluminiumlegierung. Dabei wird bevorzugt ein Werkstoff verwendet, der eine Filterfeinheit von 5 µm bis 250 µm, z.B. 30 µm bis 120 µ und/oder eine Porengröße von 0,1 mm bis 3 mm, z.B. 0,2 mm bis 1,5 mm aufweist. Porengröße meint dabei den (maximalen) Durchmesser der Poren. Filterfeinheit meint dabei die (minimale) Weite der (Durchgangs)Öffnungen zwischen den Poren der offenporigen Struktur.

Im Folgenden wird die Erfindung anhand einer lediglich ein Ausführungsbeispiel darstellenden Zeichnung näher erläutert. Es zeigen
- Fig.1: eine nicht erfindungsgemäße Membranpresse in einer stark vereinfachten Darstellung,
- Fig. 2: den nicht erfindungsgemäßen Gegenstand nach Fig. 1 in einer anderen Funktionsstellung,
- Fig. 3: eine erfindungsgemäße Ausführungsform der Presse nach Fig. 1,
- Fig. 4: die Presse nach Fig. 3 in einer anderen Funktionsstellung,
- Fig. 5: einen Umformvorgang eines mehrlagigen Organoblechs in einer ersten Ausführungsform und
- Fig. 6: einen Umformvorgang eines mehrlagigen Organoblechs in einer zweiten Ausführungsform,
- Fig. 7: eine erfindungsgemäße Presse mit C-Gestell in einer perspektivischen Ansicht,
- Fig. 8: den Gegenstand nach Fig. 7 in einer stirnseitigen Ansicht und
- Fig. 9: den Gegenstand nach Fig. 7 in einer Seitenansicht.

In den Figuren ist eine Membranpresse 1 für die Herstellung eines Bauteils aus einem Faserverbundwerkstoff dargestellt. In einer solchen Membranpresse wird ein Bauteil aus einem Faserverbundwerkstoff durch Umformen eines thermoplastischen Halbzeugs, z.B. Organoblechs 2 hergestellt. Die Membranpresse 1 weist im Ausführungsbeispiel ein Pressenunterteil 3 auf, das als Pressentisch ausgebildet ist, auf dem eine Form 4 als Negativform des herzustellenden Bauteils angeordnet ist. Außerdem weist die Presse 1 ein Pressenoberteil 5 auf, welches einen gegen das Pressenunterteil 3 abdichtbaren haubenartigen Druckkoffer 6 aufweist. Dazu ist die untere, auf dem Pressentisch absetzbare umlaufende Stirnfläche 7 des Druckkoffers 6 mit einer umlaufenden Dichtung 8 versehen. Auf das Pressenoberteil 5 wirkt ein Presszylinder 9, wobei im Ausführungsbeispiel der Kolben 10 des Presszylinders 9 an den Druckkoffer 6 angeschlossen ist, so dass der Druckkoffer 6 mit dem Zylinder 9 bzw. dessen Kolben 10 gegen das Pressenunterteil 3 gedrückt wird. Außerdem ist die Membranpresse 1 mit einer elastisch dehnbaren Membran 11 ausgerüstet, welche über die Form 4 spannbar ist. Ferner ist eine Vakuumpumpe 12 vorgesehen, welche im Ausführungsbeispiel an das Pressenunterteil 3 angeschlossen ist. Optional ist eine Überdruckpumpe 13 vorgesehen, die im Ausführungsbeispiel an das Pressenoberteil 5 bzw. an den Druckkoffer 6 angeschlossen ist.

Zum Umformen eines Organoblechs 2 wird dieses Organoblech auf die Form 4 gelegt und die Membran 11 wird unter Zwischenschaltung des Oranoblechs 2 über die Form 4 gedehnt und vorgespannt.

Das Organoblech wird unter Bildung des Bauteils umgeformt, indem die Membran 11 auf der der Form 4 zugewandten Seite über die Vakuumpumpe 12 mit einem Unterdruck beaufschlagt wird und ggf. auf der der Form 4 abgewandten Seite mit der Überdruckpumpe 13 mit einem Überdruck beaufschlagt wird, so dass sich das Organoblech 2 unter Bildung des Bauteils an die Form 4 anformt.

Dabei ist vorgesehen, dass das Organoblech 2 vor dem Einlegen in die Presse 1 erwärmt wird. Außerdem ist bevorzugt vorgesehen, dass die Form 4 oder zumindest deren dem Organoblech 2 zugewandte Oberfläche vor und/oder während der Umformung erwärmt wird. Schließlich ist es zweckmäßig, wenn auf das Druckmedium, mit welchem die Membran mit Überdruck beaufschlagt wird, erwärmt wird. Dazu ist in den Figuren eine Heizvorrichtung 14 angedeutet.

Die Heizvorrichtungen zum Erwärmen des Organoblechs und zum Erwärmen der Form sind nicht dargestellt.

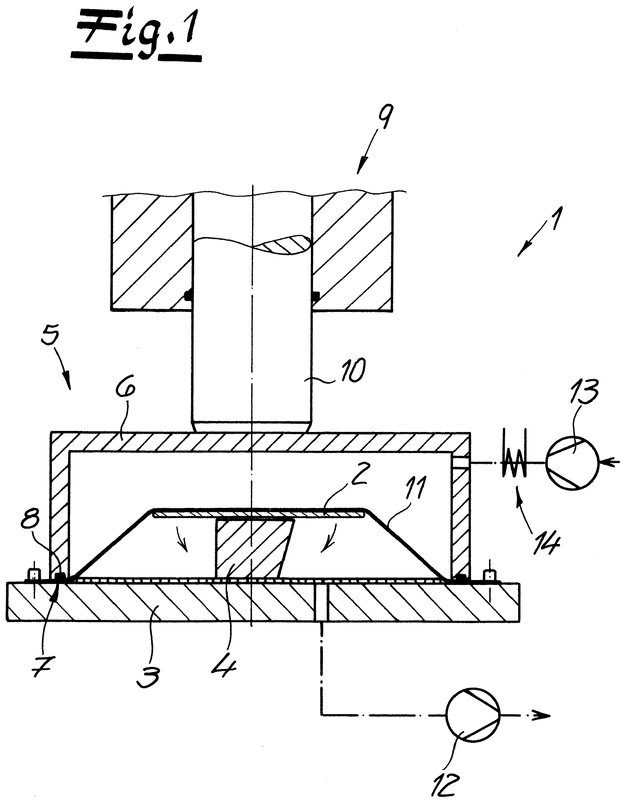

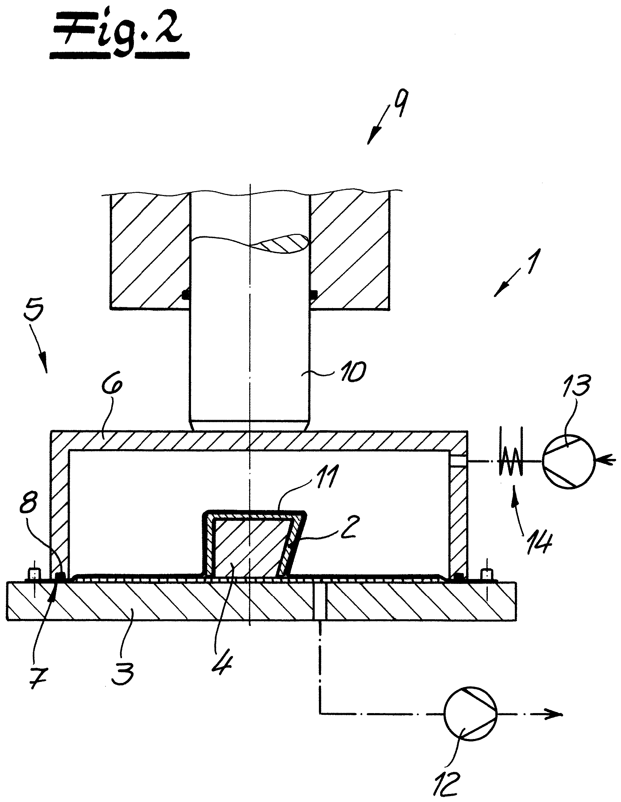

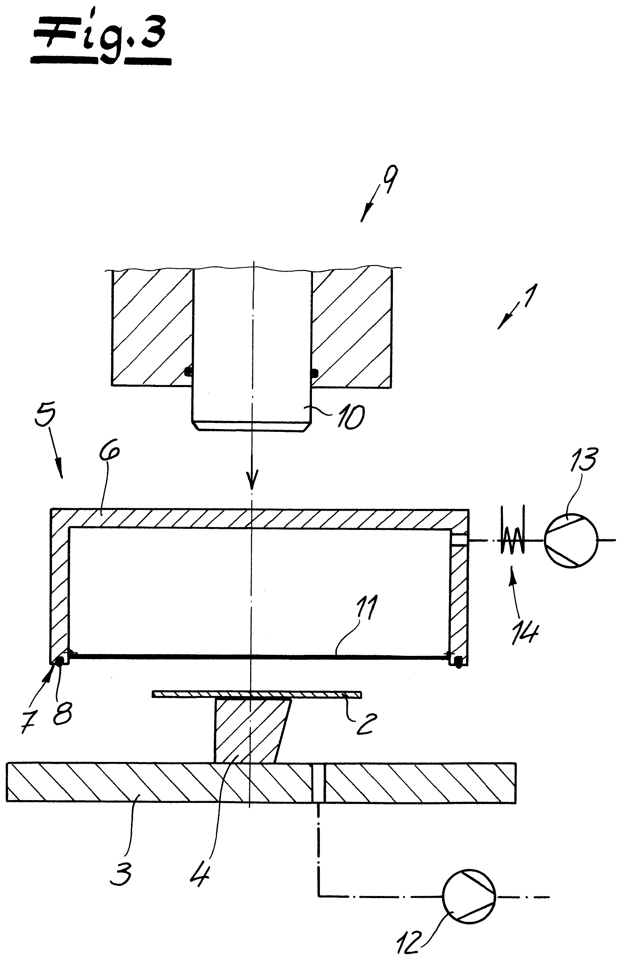

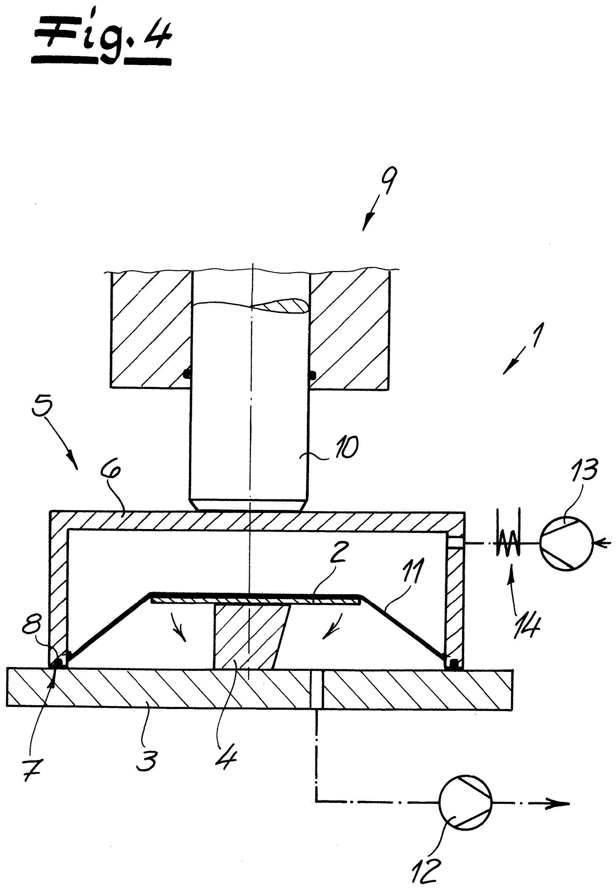

Fig. 1 zeigt eine nicht erfindungsgemäße Ausführungsform einer solchen Membranpresse, bei welcher die Membran 11 an dem Pressenunterteil 3 befestigt und über die Form 4 gespannt wird. Fig. 1 zeigt die Presse, nachdem das Organoblech 2 auf die Form 4 aufgelegt und die Membran 11 über die Form 4 unter Zwischenschaltung des Organoblechs 2 gespannt wurde. Außerdem wurde das Pressenoberteil 5 nach dem Einlegen des Organoblechs 2 und nach dem Spannen der Membran 11 auf das Pressenunterteil 3 abgesenkt und abgedichtet. Der Unterdruck kann mit der Vakuumpumpe 12 vor und/oder nach dem Absenken des Pressenoberteils erzeugt werden. Nachdem das Pressenoberteil 5 gegen das Pressenunterteil 3 abgesenkt und abgedichtet wurde, wird der Innenraum des Druckkoffers 6 mit dem Überdruck beaufschlagt. Dabei kann vorgesehen sein, dass der mit dem Zylinder 9 erzeugte Pressdruck, mit welchem die Membranpresse bei sich aufbauendem Innendruck zugehalten wird, sukzessive mit dem Aufbau des Innendrucks erhöht und folglich angepasst wird. Fig. 2 zeigt die nicht erfindungsgemäße Presse nach erfolgtem Aufbau des Überdrucks und des Unterdrucks mit umgeformtem Organoblech 2. Die Fig. 3 und 4 zeigen eine erfindungsgemäße Membranpresse, bei der die Membran nicht am Pressenunterteil 3, sondern am Pressenoberteil 5, nämlich an dessen Druckkoffer 6 befestigt und elastisch vorgespannt ist (Fig. 3). Nach dem Auflegen des Organoblechs 2 auf die Form 4 wird der Druckkoffer 6 abgesenkt und dabei die Membran unter Zwischenschaltung des Organoblechs 2 über die Form gespannt (Fig. 4). Nachdem die Presse geschlossen wurde, werden einerseits der Unterdruck und andererseits der Überdruck aufgebaut und damit das Organoblech 2 umgeformt und das Bauteil erzeugt.

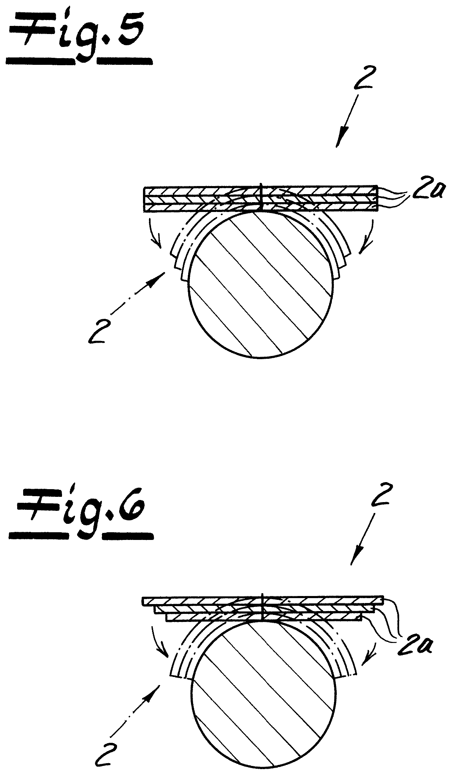

Das Organoblech 2 kann aus mehreren einzelnen Organoblechlagen 2a bestehen, die unter Bildung des Organoblechs 2 zusammengelegt und in der Presse umgeformt werden. Dabei können die Lagen 2a in ihrer Geometrie so aufeinander abgestimmt werden, dass sich die einzelnen Lagen 2a im Zuge der Umformung unter Veränderung der Kantengeometrie des Bauteils gegeneinander verschieben. Diese Option ist in den Fig. 5 und 6 dargestellt. Gemäß Fig. 5 werden die einzelnen Lagen 2a zu einem Organoblech 2 mit geraden Kanten zusammengelegt. Im Zuge der Umformung kommt es zu einer Verschiebung der einzelnen Lagen zueinander, so dass ein Bauteil mit abgeschrägten Kanten entsteht.

Im Gegensatz dazu zeigt Fig. 6 eine Ausführungsform, bei welcher die einzelnen Lagen 2a des Organoblechs 2 nicht bündig übereinander liegen, sondern schräge Kanten bilden, so dass dann im Zuge der Umformung ein Bauteil mit geraden Kanten ohne Schrägen entsteht.

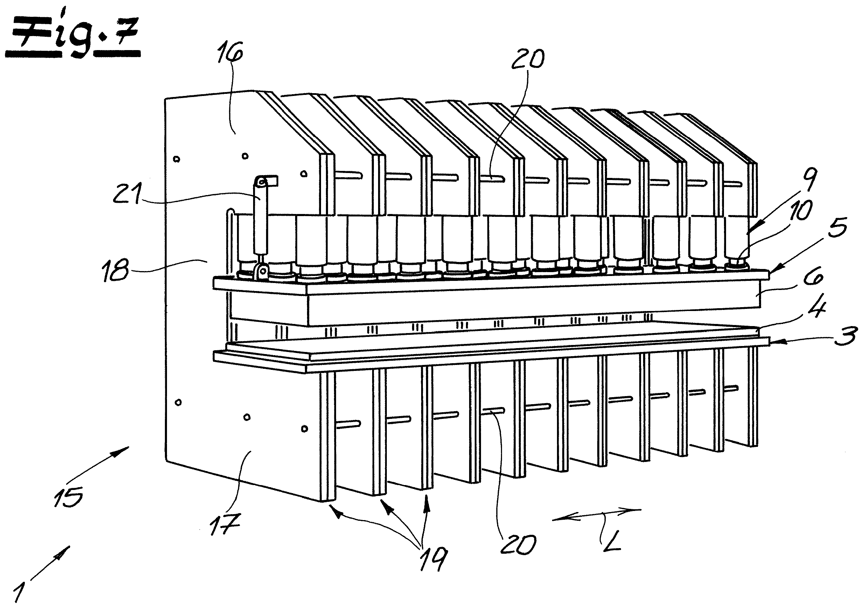

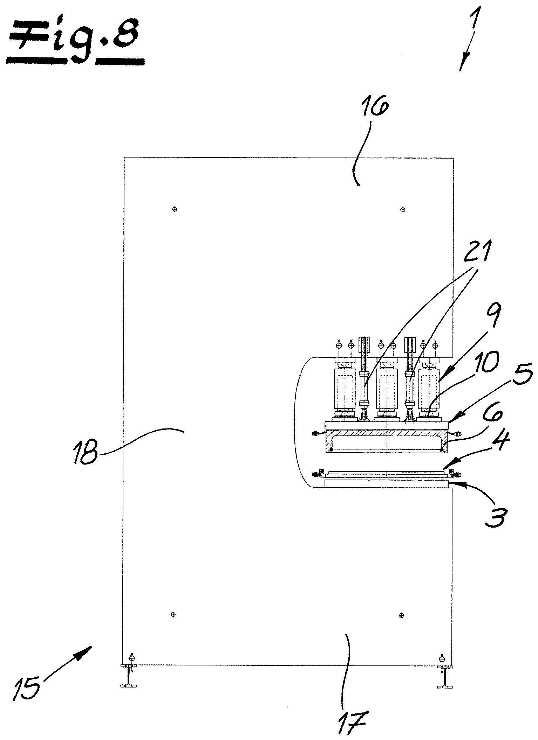

Die Erfindung soll in besonderem Maße anhand der Fig. 7 bis 9 erläutert werden. Diese Figuren zeigen, dass das Pressengestell 15 als C-Gestell ausgebildet ist und einen oberen C-Schenkel 16, einen unteren C-Schenkel 17 und eine vertikale C-Basis 18 aufweist, welche die horizontalen Schenkel 16, 17 miteinander verbindet. Das Pressengestell 15 ist dabei in Rahmenbauweise aus einer Vielzahl von Pressenrahmen 19 zusammengesetzt, wobei diese Pressenrahmen 19 jeweils ebenfalls C-förmig ausgebildet sind. Jeder Pressenrahmen 19 besteht dabei aus einem oder mehreren (einstückigen) Rahmenblechen. Die einzelnen Pressenrahmen 19 sind in Längsrichtung L hintereinander angeordnet mittels Spannelementen, z.B. Spannstangen 20 miteinander verspannt.

Die Fig. 7 bis 9 zeigen dabei eine Ausführungsform einer solchen Membranpresse als Oberkolbenpresse. Das Pressenoberteil 5 ist folglich als Laufholm ausgebildet, an welchem der Druckkoffer 6 befestigt ist. Das Pressenunterteil 3 ist als Pressentisch ausgebildet, so dass dieser Pressentisch 3 den unteren C-Schenkel 16 bzw. deren Pressenrahmen überspannt. Es sind eine Vielzahl von Presszylindern 9 vorgesehen, die an dem oberen C-Schenkel 16 befestigt und abgestützt sind und die auf den beweglichen Laufholm 5 arbeiten, indem z.B. die Kolben 10 der Presszylinder 9 an das Pressenoberteil 5 und folglich den Laufholm angeschlossen sind.

In dem dargestellten Ausführungsbeispiel sind die Presszylinder 9 in einer Matrix bzw. in einem Raster aus mehreren Reihen angeordnet, wobei im Ausführungsbeispiel drei Reihen vorgesehen sind, die sich jeweils über die gesamte Pressenlänge erstrecken. Dabei sind jedem Pressenrahmen 19 mehrere Presszylinder 9, z.B. drei Presszylinder zugeordnet. Im Ausführungsbeispiel sind an jedem Pressenrahmen 19 jeweils drei Presszylinder 9 abgestützt. Außerdem ist in den Figuren erkennbar, dass zusätzlich zu den Presszylindern 9 noch Rückzugzylinder 21 vorgesehen sein können.

Die Presszylinder 9 können folglich grundsätzlich als einfach wirkende Zylinder ausgebildet sein, mit denen die Presskräfte aufgebracht werden. Über die Rückzugszylinder 21 lassen sich die Presszylinder dann zurückziehen und die Presse folglich öffnen. Optional können die Presszylinder 9 aber auch als doppelt wirkende Zylinder ausgebildet sein, wobei dann ggf. auf Rückzugzylinder verzichtet werden kann. Auch beim Einsatz von doppelt wirkenden Zylindern kann jedoch der Einsatz von Rückzugzylindern zweckmäßig sein.

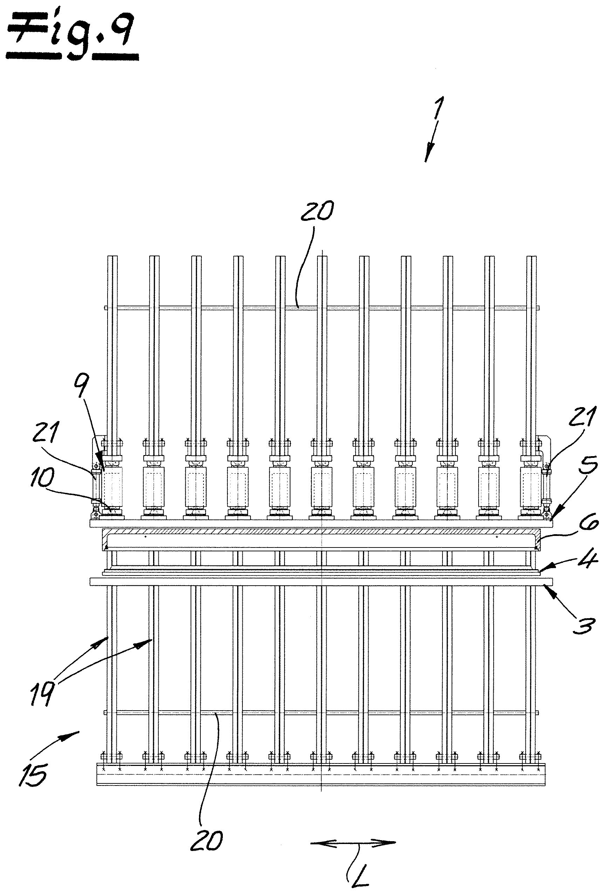

In dem in den Fig. 9 dargestellten Ausführungsbeispielen ist die nicht dargestellte Membran 11 in den Druckkoffer 6 eingespannt. Der Laufholm 5 ist beheizbar, ebenso ist der Pressentisch 3 beheizbar. Ferner sind der Druckkoffer 6 und auch die Grundplatte beheizbar, wobei die Grundplatte in dem dargestellten Ausführungsbeispiel das Werkzeug und folglich die Form 4 bildet. Grundsätzlich liegt es aber auch im Rahmen der Erfindung, dass die Form bzw. das Werkzeug auf einer solchen Grundplatte angeordnet wird.

Die Figuren wurden anhand des bevorzugten Einsatzes von Organoblechen bzw. Organoblechlagen beschrieben. In der dargestellten Weise lassen sich jedoch ebenso andere thermoplastische, (Faser-)Halbzeuge und insbesondere auch Halbzeuge aus einer Vielzahl einzelner Lagen verarbeiten, die (nicht konsolidiert) lose in die Presse eingelegt werden.

## Patentansprüche

1. Presse zum Herstellen eines Bauteils aus einem Faserverbundwerkstoff, welche als Membranpresse ausgebildet ist, mit
- einem Pressengestell,
- einem Pressenunterteil (3), an/auf dem eine Form (4) angeordnet wird,
- einem Pressenoberteil (5), welches einen gegen das Pressenunterteil (3) abdichtbaren Druckkoffer (6) aufweist,
- einem oder mehreren Presszylindern (9), die an dem Pressengestell abgestützt sind und auf das Pressenoberteil (5) und/oder das Pressenunterteil (3) wirken,
- einer Membran (11), welche über oder gegen die Form (4) spannbar ist,
- einer Vakuumpumpe (12), mit der auf einer Seite der Membran (11) ein Unterdruck erzeugbar ist,
**dadurch gekennzeichnet, dass** das Pressengestell (15) als C-Gestell mit oberem horizontalen C-Schenkel (16), unterem horizontalen C-Schenkel (17) und vertikaler C-Basis (18) ausgebildet ist und
dass die Membran (11) an dem Pressenoberteil (5) elastisch vorgespannt befestigt ist.

2. Presse nach Anspruch 1, **dadurch gekennzeichnet, dass** das C-Gestell (15) in Rahmenbauweise aus mehreren hintereinander angeordneten und jeweils C-förmig ausgebildeten und miteinander verbundenen Pressenrahmen (19) besteht.

3. Presse nach Anspruch 2, **dadurch gekennzeichnet, dass** die Pressenrahmen (19) mit Spannelementen miteinander verspannt sind.

4. Presse nach einem der Ansprüche 1 bis 3, in der Ausführungsform als Oberkolbenpresse, **dadurch gekennzeichnet, dass** die Presszylinder (9) an dem oberen C-Schenkel (16) abgestützt sind und auf das bewegliche Pressenoberteil (5) als Laufholm arbeiten und dass das Pressenunterteil (3) als Pressentisch ortsfest auf dem unteren C-Schenkel (17) angeordnet ist.

5. Presse nach einem der Ansprüche 1 bis 4, **dadurch gekennzeichnet, dass** das Pressenunterteil (3) und/oder das Pressenoberteil (5) beheizbar sind.

6. Presse nach einem der Ansprüche 1 bis 5, **dadurch gekennzeichnet, dass** die Form (4) oder eine die Form aufweisende bzw. die Form bildende Grundplatte beheizbar ist.

7. Presse nach einem der Ansprüche 1 bis 6, **dadurch gekennzeichnet, dass** der Druckkoffer (6) beheizbar ist.

8. Presse nach einem der Ansprüche 1 bis 7, **dadurch gekennzeichnet, dass** die Membran (11) aus Silikon gefertigt ist.

## Claims

1. Press for manufacturing a component made of fibre-reinforced composite, designed as a membrane press, with
- a press stand
- a press lower part (3) to/on which a mould (4) is arranged,
- a press upper part (5) which comprises a pressure case (6) that is sealable against the press lower part (3)
- one or more press cylinders (9) which are supported at the press stand and act on the press upper part (5) and/or press lower part (3),
- a membrane (11) which is stretchable over or against the mould (4),
- a vacuum pump (12) with which a vacuum can be generated on one side of the membrane (11),
**characterised in that** the press stand (15) is designed as a C-frame with an upper horizontal C-leg (16), a lower horizontal C-leg (17) and a vertical C-base (18), and
**in that** the membrane (11) is elastically fastened to the press upper part (5) in a pre-tensioned manner.

2. Press according to claim 1, **characterised in that** the C-frame (15) in framework construction consists of several C-shaped press frames (19) arranged one behind the other and connected to each other.

3. Press according to claim 2, **characterised in that** the press frames (19) are clamped to each other with clamping elements.

4. Press according to any one of claims 1 to 3, in the embodiment as an upper piston press, **characterised in that** the press cylinders (9) are supported on the upper C-leg (16) and act on the moveable press upper part (5) as a moving crosshead, and **in that** the press lower part (3) as a press bench is arranged stationarily on the lower C-leg (17).

5. Press according to any one of claims 1 to 4, **characterised in that** the press lower part (3) and/or the press upper part (5) is/are heatable.

6. Press according to any one of claims 1 to 5, **characterised in that** the mould (4) or a base plate comprising the mould or forming the mould, is heatable.

7. Press according to any one of claims 1 to 6, **characterised in that** the pressure case (6) is heatable.

8. Press according to any one of claims 1 to 7 **characterised in that** the membrane (11) is made of silicone.

## Revendications

1. Presse destinée à la fabrication d'un composant en matériau composite renforcé par de fibres, laquelle est constituée sous la forme d'une presse à membrane, avec
- un bâti de presse,
- une partie inférieure de presse (3), sur laquelle est disposée un moule (4),
- une partie supérieure de presse (5), laquelle comporte un caisson de pression (6) pouvant être appliqué hermétiquement contre la partie inférieure de presse (3),
- un ou plusieurs vérins de compression (9), qui sont supportés sur le bâti de presse et agissent sur la partie supérieure de presse (5) et/ou la partie inférieure de presse (3),
- une membrane (11), laquelle peut être tendue sur ou contre le moule (4),
- une pompe à vide (12) avec laquelle une dépression peut être produite sur un côté de la membrane (11),
**caractérisée en ce que** le bâti de presse (15) est constitué sous la forme d'un bâti en C avec une branche en C supérieure horizontale (16), une branche en C inférieure horizontale (17) et une base en C verticale (18) et
**en ce que** la membrane (11) est fixée tendue de façon élastique sur la partie supérieure de presse (5).

2. Presse selon la revendication 1, **caractérisée en ce que** le bâti en C (15) est composé dans la conception de cadre de plusieurs cadres de presse (19) disposés les uns derrière les autres et respectivement constitués en forme de C et reliés entre eux.

3. Presse selon la revendication 2, **caractérisée en ce que** les cadres de presse (19) sont serrés l'un à l'autre avec des éléments de serrage.

4. Presse selon l'une quelconque des revendications 1 à 3, dans la forme d'exécution sous la forme de presse descendante, **caractérisée en ce que** les vérins de compression (9) sont supportés sur la branche en C supérieure (16) et fonctionnent sur la partie supérieure de presse (5) comme longeron mobile et **en ce que** la partie inférieure de presse (3) est disposée de façon fixe sur la branche en C inférieure (17) en tant que plateau de presse.

5. Presse selon l'une quelconque des revendications 1 à 4, **caractérisée en ce que** la partie inférieure de presse (3) et/ou la partie supérieure de presse (5) peuvent être chauffées.

6. Presse selon l'une quelconque des revendications 1 à 5, **caractérisée en ce que** le moule (4) ou une plaque de base comportant le moule ou formant le moule, peut être chauffé(e).

7. Presse selon l'une quelconque des revendications 1 à 6, **caractérisée en ce que** le caisson de pression (6) peut être chauffé.

8. Presse selon l'une quelconque des revendications 1 à 7, **caractérisée en ce que** la membrane (11) est fabriquée en silicone.
